# DEMANDE DE BREVET EUROPEEN

(11) **EP 1 912 182 A1**
(43) Date de publication de la demande: **16.04.2008**
(21) Numéro de dépôt: 07118062.4
(22) Date de dépôt: 08.10.2007
(51) Int. Cl.: G07F 7/08, G07F 7/10

(54) **Autorisation d'une transaction entre un circuit électronique et un terminal**

(30) Priorité: 12.10.2006 FR 0654218
(71) Demandeur: PROTON WORLD INTERNATIONAL N.V., 1930 ZAVENTEM (BE)
(72) Inventeur: Huque, Thierry, 1367, Ramillies (BE); Coppez, Pierre, 7530, Gaurain-Ramecroix (BE)
(74) Mandataire: de Beaumont, Michel

(57) **Abrégé**

L'invention concerne un procédé d'autorisation d'une transaction dans un système impliquant au moins un circuit électronique et un terminal, dans lequel : au moins un test (42) provoque une mise à jour d'au moins un bit d'au moins un premier mot (CVR/ADR) conditionnant l'autorisation de la transaction ; le premier mot est comparé à au moins un deuxième mot (CIAC), au moins pour déterminer (43) si la transaction doit être validée par une entité distincte du terminal et du circuit, ou peut l'être sans connexion avec cette entité ; et en cas de refus d'une transaction, un troisième mot (INF) contenant au moins un champ indicateur de la position, dans le premier mot, du bit ayant déclenché le refus, est stocké dans un élément de mémorisation non volatile (13) du circuit.

## Description

### Domaine de l'invention

La présente invention concerne de façon générale les circuits électroniques et, plus particulièrement, de tels circuits intervenant dans l'autorisation d'une transaction avec un terminal de lecture-écriture du circuit. L'invention s'applique plus particulièrement aux circuits susceptibles d'effectuer des transactions avec et sans établissement d'une communication avec une entité distincte du terminal. L'invention s'applique, par exemple, aux cartes à puce et aux transactions représentant un paiement, susceptibles de fonctionner en respectant une norme dite EMV (Europay, Mastercard, Visa).

### Exposé de l'art antérieur

Dans l'application aux cartes bancaires et plus généralement dans des mécanismes d'autorisation de transactions utilisant un circuit électronique d'authentification d'un utilisateur, on distingue deux types de transactions selon qu'une entité distincte du terminal de lecture du circuit électronique intervient (on parle alors de transaction en ligne, ou on-line) ou pas (on parle alors de transaction non en ligne, ou off-line) pour valider la transaction.

En cas de refus de transaction, l'utilisateur cherche souvent à connaître la raison de ce refus. Lors d'une transaction en ligne, l'établissement (par exemple, bancaire) ayant validé la transaction peut communiquer des messages ou des codes de messages reconstitués par le terminal pour informer l'utilisateur, dans la mesure où la décision est prise par cet établissement bancaire qui connaît donc le motif du refus. Mais, dans une transaction non en ligne, le terminal n'est pas en mesure de déterminer les raisons d'un échec de transaction. Même l'établissement bancaire n'est généralement pas en mesure de fournir de réponse sur l'origine du refus s'il est alors contacté par le porteur de la carte.

### Résumé de l'invention

La présente invention vise à pallier tout ou partie des inconvénients des systèmes d'autorisation de transaction au moyen de cartes à puce ou analogues.

L'invention vise plus particulièrement un mécanisme d'interprétation d'un refus de transaction non en ligne. Plus généralement, l'invention vise un tel mécanisme d'authentification ou d'autorisation combinant des autorisations de transaction en ligne et non en ligne.

Pour atteindre tout ou partie de ces objets ainsi que d'autres, la présente invention prévoit un procédé d'autorisation d'une transaction impliquant au moins un circuit électronique et un terminal, dans lequel :
au moins un test provoque une mise à jour d'au moins un bit d'au moins un premier mot conditionnant l'autorisation de la transaction ;
le premier mot est comparé à au moins un deuxième mot, au moins pour déterminer si la transaction doit être validée par une entité distincte du terminal et du circuit, ou peut l'être sans connexion avec cette entité ; et
en cas de refus d'une transaction, au moins un troisième mot contenant au moins un champ indicateur de la position, dans le premier mot, du bit ayant déclenché le refus, est stocké dans un élément de mémorisation non volatile du circuit, sans stocker le premier mot.

Selon un mode de mise en oeuvre de l'invention, ledit troisième mot est stocké dans le circuit seulement si la transaction est refusée sans connexion avec ladite entité.

Selon un mode de mise en oeuvre de l'invention, au moins un troisième mot, préalablement enregistré dans le circuit, est transmis à ladite entité lors d'une validation de transaction par cette entité.

Selon un mode de mise en oeuvre de l'invention, ledit troisième mot comporte un champ indicateur de sa transmission à ladite entité.

Selon un mode de mise en oeuvre de l'invention, plusieurs troisièmes mots représentant chacun un refus, de préférence décidé sans connexion, sont stockés dans un fichier cyclique d'une mémoire non volatile du circuit.

Selon un mode de mise en oeuvre de l'invention, ledit troisième mot comporte un champ indicateur du rang de la transaction sans connexion depuis une transaction avec connexion à ladite entité.

Selon un mode de mise en oeuvre de l'invention, ledit premier mot est contenu dans un élément de mémorisation non volatile du circuit.

Selon un mode de mise en oeuvre de l'invention, ledit premier mot est contenu dans le terminal.

Selon un mode de mise en oeuvre de l'invention, ledit troisième mot comporte au moins un champ indicateur de la position d'un bit du premier mot contenu dans le circuit et au moins un champ indicateur de la position d'un bit d'un autre premier mot contenu dans le terminal.

Selon un mode de mise en oeuvre de l'invention, appliqué à des transactions monétaires, ledit troisième mot comporte un champ indicateur de la position du bit de poids fort du montant de la transaction.

Selon un mode de mise en oeuvre de l'invention, ledit troisième mot comporte un champ indicateur de la date de la transaction refusée.

L'invention prévoit également un système de transaction impliquant au moins un circuit électronique, un terminal et une entité distincte du terminal et du circuit.

L'invention prévoit également un circuit électronique.

L'invention prévoit également une carte à puce comportant au moins un circuit électronique.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente, de façon très schématique, une carte à puce à laquelle s'applique à titre d'exemple la présente invention ;
la figure 2 représente, de façon très schématique et sous forme de blocs, un exemple de circuit électronique du type auquel s'applique la présente invention ;
la figure 3 représente, de façon très schématique et sous forme de blocs, des éléments d'un système de paiement intervenant dans une transaction dite non en ligne ;
la figure 4 représente, de façon très schématique et sous forme de blocs, des éléments d'un système EMV participant à une transaction dite en ligne ;
la figure 5 est un schéma fonctionnel simplifié de mécanismes d'autorisation d'une transaction au moyen d'une carte bancaire ;
la figure 6 illustre, de façon de très schématique et sous forme de blocs, la forme d'un mot numérique utilisé dans des mécanismes d'autorisation de transaction ;
la figure 7 représente, de façon très schématique et sous forme de blocs, un mot d'information selon un mode de mise en oeuvre de la présente invention ; et
la figure 8 est un schéma fonctionnel illustrant un mode de mise en oeuvre du procédé d'autorisation de transaction selon la présente invention.

De mêmes éléments ont été désignés par de mêmes références aux différentes figures. Pour des raisons de clarté, seuls les étapes et éléments utiles à la compréhension de l'invention ont été représentés et seront décrits. En particulier, les mécanismes de communication utilisés dans les transactions d'authentification et d'autorisation n'ont pas été détaillés, l'invention étant compatible avec les mécanismes usuels. De plus, les échanges entre les différents acteurs du système, notamment EMV, n'ont pas été détaillés, l'invention étant là encore compatible avec les mécanismes d'échange usuels.

### Description détaillée

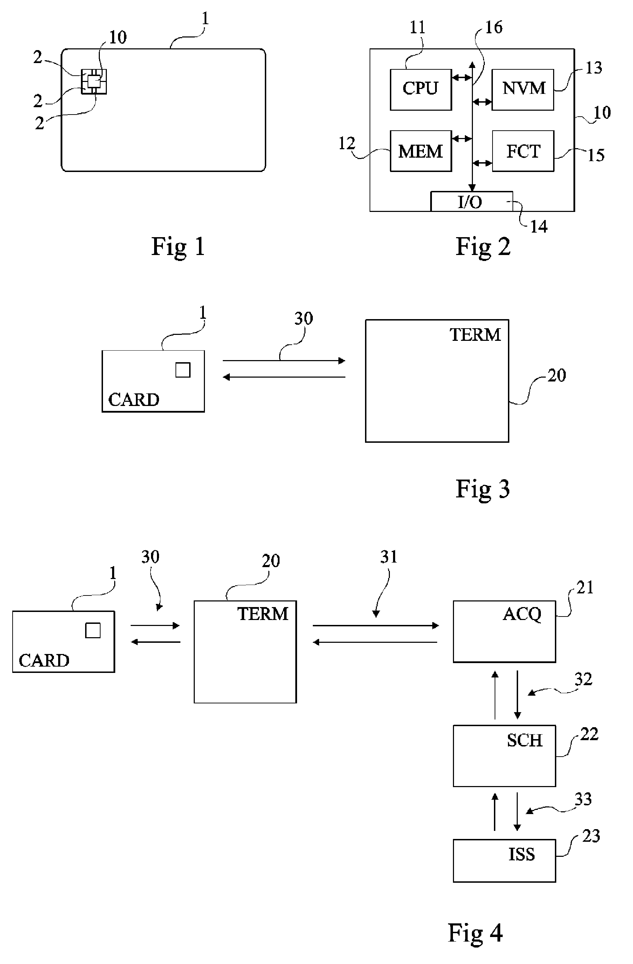

La figure 1 représente, de façon très schématique, une carte à puce 1 du type auquel s'applique, à titre d'exemple, la présente invention. Une telle carte 1 est constituée d'un matériau support (généralement en matière plastique) portant ou renfermant un ou plusieurs circuits électroniques 10. Le circuit 10 communique avec l'extérieur au moyen de contacts 2, connectables à un terminal de lecture/écriture. Le circuit 10 peut également être associé à des moyens d'émission-réception sans contact et communiquer alors sans fil avec le terminal (par exemple, par rayonnement radiofréquence ou électromagnétique). La carte 1 a une taille fonction du terminal avec laquelle elle coopère. Par exemple, sa taille peut se limiter à celle requise pour supporter le circuit électronique et ses contacts (cas d'une carte d'un téléphone mobile où le terminal est alors le téléphone).

La figure 2 représente, de façon très schématique et sous forme de blocs, un exemple de circuit électronique 10 du type auquel s'applique la présente invention. Un tel circuit est, par exemple, celui d'une carte à puce telle que représentée en figure 1.

Le circuit 10 inclut une unité de traitement 11, par exemple une unité centrale de traitement (CPU), communiquant, à l'intérieur du circuit 10 et par l'intermédiaire d'un ou plusieurs bus 16 (ou de liaisons directes ou les deux) de données, d'adresses et de commandes, au moins avec une ou plusieurs mémoires volatiles 12 (MEM) et non volatiles 13 (NVM) et avec un circuit 14 d'entrée/sortie (I/O). Le circuit 14 sert d'interface pour communication, avec ou sans contact, avec l'extérieur du circuit 10. Le plus souvent, le circuit 10 comporte d'autres fonctions logicielles, matérielles ou les deux, symbolisées en figure 2 par un bloc 15 (FCT).

La présente invention sera décrite par la suite en relation avec un exemple d'application à une carte bancaire satisfaisant à la norme EMV. Elle s'applique toutefois plus généralement à tout circuit électronique utilisé pour décider ou non d'une transaction. Une transaction représente un échange de données soit entre le circuit électronique et le terminal (par exemple, un ticket virtuel d'accès à un service transféré du terminal à la carte - par exemple, un ticket de transport, de spectacle, etc.), soit entre deux entités respectivement associées au circuit et au terminal (par exemple, un accord de transfert réel ou fictif d'un montant entre des comptes bancaires respectivement associés au terminal et à la carte bancaire, ou un transfert de données entre deux équipements respectivement associés au terminal et au circuit électronique). De même, le circuit électronique peut être porté par un autre support qu'une carte plastique. Par exemple, il peut être porté par un produit quelconque ou être monté sur une carte électronique d'un dispositif (le plus souvent mobile) susceptible de communiquer avec un terminal pour effectuer des transactions.

La figure 3 représente, de façon très schématique et sous forme de blocs, des éléments d'un système de paiement intervenant dans une transaction dite non en ligne (off-line), c'est-à-dire sans connexion avec une entité distincte du terminal lors de la transaction pour la valider (par exemple, l'établissement bancaire ayant fourni la carte). Dans une transaction non en ligne, l'authentification de la carte et la décision d'autoriser ou de refuser la transaction est donc prise, par la carte, par le terminal ou par les deux, mais sans recours à l'établissement bancaire ayant fourni la carte. Dans cet exemple, la carte 1 (CARD) communique avec ou sans contact (flèches 30) avec un terminal 20 (TERM). Ce terminal est, par exemple, le lecteur de cartes bancaires d'un commerçant. Les mécanismes d'autorisation consistent non seulement à authentifier la carte et son porteur (en particulier par saisie du code PIN), mais également à vérifier un certain nombre de données (par exemple, les montants et nombres de transactions). Ces vérifications sont fonction de l'application de la carte et sont, dans cet exemple, détaillées dans différentes normes connues sous les dénominations EMV, VIS, CPA et MCHIP4.

La figure 4 illustre, de façon très schématique et sous forme de blocs, des éléments d'un système EMV participant à une transaction dite en ligne (on-line), c'est-à-dire dans laquelle une connexion (communication) est établie avec une entité distincte du terminal (généralement à distance).

Comme dans le premier cas, la carte 1 communique avec ou sans contact (flèches 30) avec un terminal 20. Toutefois, le terminal 20 communique (flèches 31) également avec l'établissement bancaire 21 (ACQ, "acquirer") du commerçant possédant le terminal. Ce premier établissement bancaire 21 communique (flèches 32) avec une entité 22 gérant le réseau des cartes bancaires (SCH, "scheme") qui elle-même communique (flèches 33) avec l'établissement bancaire 23 (ISS, "issuer") ayant fourni la carte 1, c'est-à-dire possédant le compte bancaire de son titulaire. Par la suite, cette entité 23 sera indifféremment désignée comme étant le fournisseur de la carte, l'entité de validation ou l'établissement bancaire. En variante, si la carte et le terminal sont fournis par le même établissement bancaire, la validation de la transaction est directement effectuée par l'établissement 21 (confondu avec l'établissement 23).

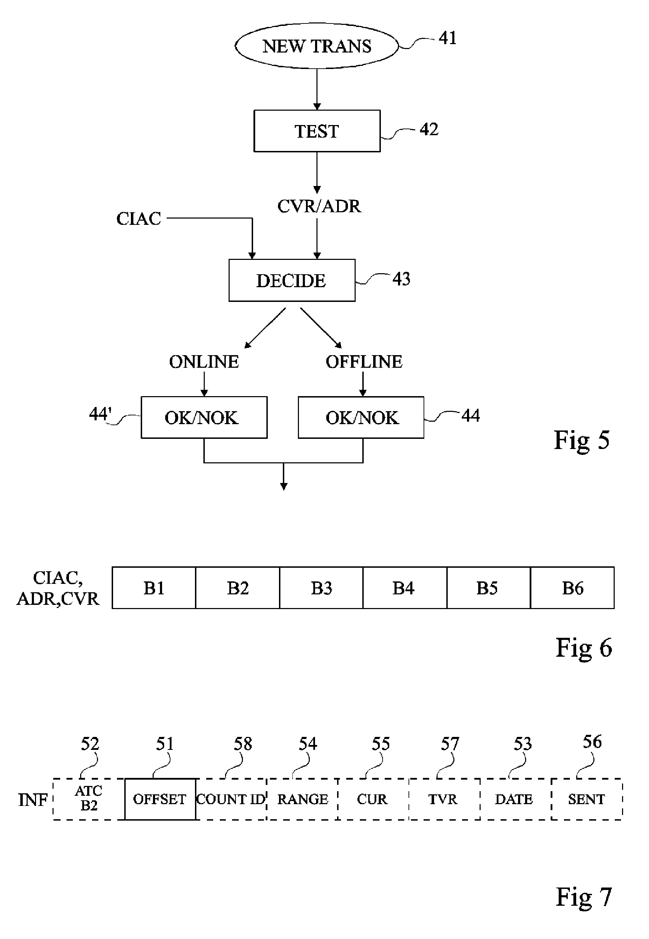

La figure 5 est un schéma fonctionnel simplifié de mécanismes d'autorisation d'une transaction au moyen d'une carte bancaire.

Lors d'une demande de nouvelle transaction (bloc 41, NEW TRANS), suite à l'introduction d'une carte dans un terminal, on effectue un ensemble de tests et de vérifications (bloc 42, TEST) comprenant, entre autres, l'authentification du porteur de la carte par saisie du code PIN, la vérification d'un seuil de montant maximal de transaction non en ligne, etc. Ces vérifications conduisent à des états différents de bits d'un premier mot contenant plusieurs octets de vérification, appelé CVR (Card Verification Results) ou ADR (Application Decision Results). Ce mot CVR ou ADR, généralement stocké en mémoire volatile (12, figure 2) est comparé à un deuxième mot de référence CIAC (Card Issuer Action Code) contenu dans la carte (en mémoire non volatile 13) et dont les états sont fixés par le fournisseur de celle-ci, par exemple lors de la personnalisation ou d'une transaction en ligne. Ce mot CIAC représente, entre autres, les conditions dans lesquelles une transaction doit être autorisée (notamment en ligne ou non), fixe des seuils et états pour les transactions, etc. Le mot CIAC (plus précisément, au moins son octet contenant les conditions d'autorisation d'une transaction non en ligne) est comparé (bloc 43, DECID) avec le mot CVR ou ADR pour permettre au terminal d'accepter ou non une transaction directe (sans passer en ligne). La comparaison est généralement effectuée côté circuit électronique 10 de la carte dans lequel sont stockés les mots CIAC et CVR ou ADR. Le recours à une transaction en ligne est par exemple imposé lorsqu'un montant de transaction supérieur à un seuil est demandé par le terminal ou lorsqu'un nombre de transactions non en ligne est dépassé. Que la transaction ait lieu en ligne (ONLINE) ou non (OFFLINE), le mécanisme d'autorisation se poursuit par une phase de validation (bloc 44 ou 44' OK/NOK) dont la décision conditionne la suite de la transaction. Les processus décrits ci-dessus sont connus et détaillés, notamment, dans la norme EMV.

La figure 6 illustre, de façon très schématique et sous forme de blocs, la forme d'un mot CIAC, ADR ou CVR utilisé dans les mécanismes d'autorisation de transaction. Dans cet exemple, ce mot inclut six octets B1, B2, B3, B4, B5 et B6 dont les états respectifs identifient des éléments de vérification de la transaction courante ou d'une transaction précédente permettant au système de prendre la décision adaptée, en fonction du schéma décisionnel fixé par le mot CIAC de l'établissement bancaire.

Les mots ADR, CVR et CIAC contiennent des bits dans le même ordre du point de vue de leur signification, de façon à permettre une comparaison bit à bit, le mot CIAC constituant en quelque sorte un masque de lecture du mot ADR ou CVR.

Les 6 tableaux ci-dessous illustrent un exemple des significations respectives des différents bits des 6 octets d'un mot ADR. Les bits actifs du mot CIAC indiquent une action requise lorsque le bit correspondant du mot ADR est actif.

**Tableau 1 :**

| Octet | Bit | ADR |
|---|---|---|
| 1 | 1 | Echec de vérification de code PIN non en ligne |
| | 2 | Vérification de code PIN non en ligne non effectuée |
| | 3 | Dépassement du nombre de tentatives de code PIN |
| | 4 | Données d'authentification du fournisseur (issuer) non reçues lors de la transaction en ligne précédente |
| | 5 | Echec d'authentification du fournisseur |
| | 6 | Echec de traitement du script du fournisseur |
| | 7 | Aller en ligne à la prochaine transaction |
| | 8 | Dernière transaction en ligne non achevée |

**Tableau 2 :**

| Octet | Bit | ADR |
|---|---|---|
| 2 | 1 | Impossible d'aller en ligne |
| | 2 | Erreur du terminal à considérer le code PIN valable non en ligne |
| | 3 | Script reçu |
| | 4 | Echec d'authentification non en ligne lors de la transaction précédente |
| | 5 | Concordance trouvée dans le tableau 1 de vérification supplémentaire |
| | 6 | Pas de concordance dans le tableau 1 de vérification supplémentaire |
| | 7 | Concordance trouvée dans le tableau 2 de vérification supplémentaire |
| | 8 | Pas de concordance dans le tableau 2 de vérification supplémentaire |

**Tableau 3 :**

| Octet | Bit | ADR |
|---|---|---|
| 3 | 1 | Dépassement du nombre de jours non en ligne |
| | 2 | Dépassement de la limite inférieure du compteur additionnel |
| | 3 | Dépassement de la limite inférieure de l'accumulateur additionnel |
| | 4 | Dépassement de la limite inférieure du compteur 3 |
| | 5 | Dépassement de la limite inférieure du compteur 2 |
| | 6 | Dépassement de la limite inférieure du compteur 1 |
| | 7 | Dépassement de la limite inférieure de l'accumulateur 2 |
| | 8 | Dépassement de la limite inférieure de l'accumulateur 1 |

**Tableau 4 :**

| Octet | Bit | ADR |
|---|---|---|
| 4 | 1 | Dépassement du montant de transaction maximum |
| | 2 | Dépassement de la limite supérieure du compteur additionnel |
| | 3 | Dépassement de la limite supérieure de l'accumulateur additionnel |
| | 4 | Dépassement de la limite supérieure du compteur 3 |
| | 5 | Dépassement de la limite supérieure du compteur 2 |
| | 6 | Dépassement de la limite supérieure du compteur 1 |
| | 7 | Dépassement de la limite supérieure de l'accumulateur 2 |
| | 8 | Dépassement de la limite supérieure de l'accumulateur 1 |

**Tableau 5 :**

| Octet | Bit | ADR |
|---|---|---|
| 5 | 1 | Réservé pour utilisation par le fournisseur |
| | 2 | Réservé pour utilisation par le fournisseur |
| | 3 | Réservé pour utilisation par le fournisseur |
| | 4 | Réservé pour utilisation par le fournisseur |
| | 5 | Echec de vérification |
| | 6 | Dépassement de la limite de l'accumulateur cyclique additionnel |
| | 7 | Dépassement de la limite de l'accumulateur cyclique 2 |
| | 8 | Dépassement de la limite de l'accumulateur cyclique 1 |

**Tableau 6 :**

| Octet | Bit | ADR |
|---|---|---|
| 6 | 1-8 | Réservés pour utilisation par le fournisseur |

Selon un aspect de la présente invention, au moins un troisième mot d'information est stocké, dans le circuit électronique (par exemple de la carte à puce), en cas de refus d'une transaction non en ligne. Ce mot est destiné à être transmis à l'établissement bancaire (ou fournisseur de la carte) lors d'une prochaine transaction en ligne. Ainsi, l'établissement bancaire sera en mesure d'indiquer, à son porteur, la raison du refus de la transaction alors même que celle-ci a eu lieu sans connexion.

On pourrait penser mémoriser les mots CVR ou ADR successifs des transactions non en ligne pour les transmettre lors d'une transaction en ligne. Mais, la capacité de mémorisation dans la carte à puce ou autre circuit électronique d'authentification analogue est généralement limitée. Par ailleurs, les débits des canaux de communication entre les différents éléments du système lors d'une transaction en ligne sont souvent également limités.

Selon un aspect, la présente invention tire profit de la structure des mots de vérification (par exemple, ADR ou CVR) et de référence (par exemple, CIAC) utilisés dans les mécanismes d'authentification et d'autorisation de transaction pour réduire le volume d'informations à stocker en cas de refus d'une transaction non en ligne, puis à transmettre lors d'une prochaine transaction en ligne.

En particulier, l'invention prévoit de stocker la position du bit du mot de vérification (ou du mot de référence) ayant conduit au refus, sans stocker le mot de vérification. Comme il ressort des tableaux décrits précédemment, la position d'un bit dans l'un des mots de vérification ADR ou CVR est prédéfinie. De plus, le mot de référence CIAC est fourni par le fournisseur de la carte (l'établissement bancaire) et est donc connu de ce dernier. Par conséquent, la connaissance par l'établissement bancaire du rang du bit ayant déclenché le refus lui suffit pour reconstituer, à partir du mot CIAC qu'il connaît, la nature du refus de la transaction.

Un avantage est que cela limite le volume d'informations à stocker et à transmettre. Dans l'exemple des applications EMV, six bits suffisent pour coder une position de 1 à 48 (6*8) à comparer aux quarante-huit bits du mot ADR ou CVR.

Dans le cas où plusieurs sources de refus ont bloqué la transaction, on ne retient préférentiellement qu'une des sources de refus (par exemple, le bit de poids fort ou de poids faible de l'octet ayant déclenché le refus). En variante, un deuxième champ de position stocke une deuxième source de refus. Cela prend toujours moins de place que le mot de vérification complet.

La figure 7 représente, de façon très schématique et sous forme de blocs, un exemple de mot d'information INF susceptible d'être stocké et transmis selon un mode de mise en oeuvre de la présente invention. Les éléments optionnels ont été illustrés en pointillés.

Un premier champ 51 du mot INF contient, comme indiqué ci-dessus, la position ou décalage (OFFSET) du bit d'un mot de vérification (par exemple, ADR ou CVR) qui a déclenché le refus de la transaction non en ligne.

De préférence, d'autres informations sont stockées et transmises dans le mot INF. Par exemple, un ou plusieurs des champs additionnels qui suivent peuvent être prévus (l'ordre des champs n'a pas d'importance) :
- un identifiant 52 (ATC B2) de la transaction ayant engendrée le refus - Il suffit d'utiliser le compteur de transactions (ATC) qui est généralement présent dans la carte et qui est réinitialisé, par exemple, à chaque nouvelle transaction en ligne pour être en mesure de déterminer quelle est celle des transactions qui a posé problème - En pratique, on pourra utiliser le deuxième octet de ce compteur pour avoir une information approximative suffisante ;
- la date 53 (DATE) de la transaction non en ligne ayant déclenché le refus ;
- le montant 54 (RANGE) de la transaction - La connaissance du montant exact n'est généralement pas nécessaire et on peut gagner de la place en ne stockant que la position du bit actif de poids fort d'un mot indicateur du montant pour que le fournisseur de la carte soit capable de déterminer la plage de montants concernée ;
- la devise 55 (CUR) de la transaction.

De préférence, le mot d'information contient également un indicateur 56 (SENT) d'envoi. Cet indicateur d'envoi permet, lors de chaque connexion en ligne, de déterminer si le mot a déjà été transmis, afin d'éviter des transmissions redondantes.

Selon un mode de réalisation, seul le mot d'information de la dernière transaction refusée est stocké. Une seule zone de mémorisation non volatile suffit dans le circuit de la carte et son contenu est alors écrasé à chaque nouvelle transaction non en ligne refusée.

Selon un autre mode de réalisation, plusieurs mots d'information sont stockés dans un fichier cyclique dont la taille est choisie en fonction de la mémoire disponible dans le circuit de la carte (en pratique, sans bien entendu excéder le seuil maximal de transactions non en ligne autorisées). Le mécanisme de transmission avec l'établissement bancaire conditionne le nombre de mots d'information à transmettre à chaque transaction en ligne pour renseigner un fichier d'utilisateur (considéré de taille illimitée) côté établissement bancaire. Le champ 56 indicateur d'envoi permet, dans ce mode de réalisation, de distinguer les mots transmis de ceux à transmettre.

En variante, et préférentiellement en plus du champ 51, un champ 57 (TVR) stocke une information équivalente à celle du champ 51 en cas de refus par le terminal. En effet, un mot de vérification TVR (Terminal Verification Results) similaire au mot de vérification de la carte est souvent exploité dans les mécanismes d'autorisation de transaction, le terminal utilisant alors généralement, non seulement le mot de référence IAC qu'il lit dans la carte, mais également un mot de référence TAC (Terminal Action Code) défini, par exemple, par l'entité ACQ. Ce mot contient, par exemple, l'information d'un refus pour cause de carte en liste noire (suite à opposition, par exemple). Si le mot de référence TAC contenu dans le terminal est connu de l'établissement bancaire 23, seule la position du bit est stockée dans le champ 57. Si le mot de référence TAC est géré par un autre intervenant du système (par exemple, le gestionnaire - scheme), l'information qu'il contient est codifiée à partir d'un code exploitable par tous les établissements bancaires.

Le cas échéant, un champ 58 (COUNT ID) stocke une identification du compteur ayant déclenché le refus, parmi le compteur de transactions non en ligne, le compteur de montant cumulé, le compteur de tentatives de saisie du code PIN, etc.

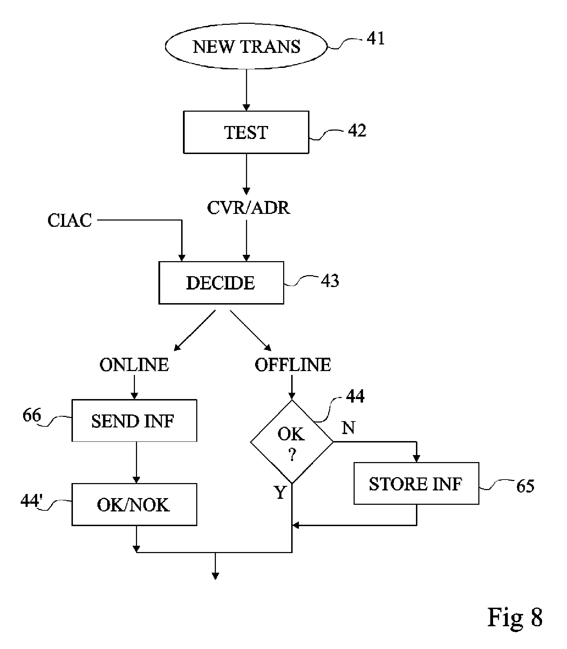

La figure 8 est un schéma fonctionnel simplifié illustrant un mode de mise en oeuvre du procédé d'autorisation de transaction selon la présente invention.

Comme illustré par la figure 5, à chaque début de transaction (bloc 41, NEW TRANS), des tests (bloc 42, TEST) sont effectués entre le terminal et la carte. Ces tests conduisent à des états d'un mot de vérification des résultats (CVR/ADR) qui sont comparés (bloc 43, DECID) dans la carte à un mot ou masque de référence CIAC afin de déterminer si la transaction doit avoir lieu en ligne ou non.

Dans le cas d'une transaction non en ligne (OFFLINE), la vérification (bloc 44, OK ?) conduit, en cas de refus (sortie N du bloc 44), à l'enregistrement du mot d'information INF (bloc 65, STORE INF) en mémoire non volatile (13, figure 2) du circuit (10) de la carte.

Dans le cas d'une transaction en ligne (ONLINE), outre l'étape de vérification 44' (OK/NOK) pour autoriser ou non la transaction, le ou plusieurs mots d'information INF contenus dans la carte sont, s'il en existe (signifiant une transaction antérieure non en ligne refusée), lus puis transmis à l'établissement bancaire (bloc 66, SENT INF).

Dès qu'une transaction en ligne a eu lieu, le fournisseur de la carte possède donc suffisamment d'informations pour communiquer au porteur de la carte les raisons des refus de transactions passées (au moins de la dernière), même si celles-ci ont été effectuées dans un mécanisme non en ligne.

En variante, lorsque le porteur de la carte introduit celle-ci dans un terminal de son réseau bancaire, le terminal concerné est capable de fournir directement une information lisible par le porteur en interprétant les états des mots INF. Ce type d'information peut prendre la forme de messages courts affichés sur l'écran du terminal, que ce soit au travers d'un menu interactif ou non.

Il ressort de l'exposé qui précède que le fournisseur de la carte peut obtenir des informations sur les transactions passées refusées, notamment alors que celles-ci ont été décidées directement entre la carte et le terminal.

Dans une application aux cartes bancaires, les mécanismes décrits sont compatibles avec les mécanismes de transmission de la norme EMV.

Bien entendu, la présente invention est susceptible de diverses variantes et modifications qui apparaîtront à l'homme de l'art. En particulier, bien que l'invention ait été décrite en relation avec un exemple d'application aux cartes bancaires de type EMV, elle s'applique plus généralement à toute authentification ou autorisation de transaction au moyen d'un circuit électronique dans des systèmes requérant des mécanismes en ligne et non en ligne, et pour lesquels une information sur des transactions refusées non en ligne est souhaitée. Par exemple, il peut s'agir de transactions de portes-monnaies électroniques, de cartes de transport, etc.

De plus, l'invention s'applique quel que soit le mécanisme de transmission utilisé par le circuit, qu'il s'agisse d'une transmission avec ou sans contact, et quel que soit les intermédiaires du système d'autorisation de transaction. Par exemple, l'invention est applicable dans le cas de paiements effectués au travers d'un téléphone mobile en utilisant sa carte SIM comme carte d'authentification.

En outre, le stockage du mot d'information dans le circuit électronique peut être prévu pour chaque transaction refusé (en ligne ou non en ligne) au prix d'un espace mémoire plus important, par exemple pour conserver, dans le circuit, un historique des transaction refusées. Cet historique est, par exemple, transmis à une entité distante, périodiquement ou après un nombre de transactions en ligne. Dans l'exemple des cartes bancaires, cette transmission peut être effectuée lorsque la carte est introduite dans un terminal de l'établissement bancaire (23) du porteur, bénéficiant alors d'un canal de communication avec le système informatique de cet établissement sans passer par le gestionnaire (22).

Enfin, la mise en oeuvre pratique de l'invention est à la portée de l'homme du métier à partir de la description fonctionnelle donnée ci-dessus en utilisant les outils logiciels et matériels disponibles dans un circuit électronique auquel l'invention s'applique, notamment pour organiser les mémorisations et transmissions des mots d'information.

## Revendications

1. Procédé d'autorisation d'une transaction impliquant au moins un circuit électronique (10) et un terminal (20), dans lequel :
au moins un test (42) provoque une mise à jour d'au moins un bit d'au moins un premier mot (CVR/ADR, TVR) conditionnant l'autorisation de la transaction ;
le premier mot est comparé à au moins un deuxième mot (CIAC, TAC), au moins pour déterminer (43) si la transaction doit être validée par une entité (23) distincte du terminal et du circuit, ou peut l'être sans connexion avec cette entité ; et
en cas de refus d'une transaction, au moins un troisième mot (INF) contenant au moins un champ (51) indicateur de la position, dans le premier mot, du bit ayant déclenché le refus, est stocké dans un élément de mémorisation non volatile (13) du circuit, sans stoker le premier mot.

2. Procédé selon la revendication 1, dans lequel ledit troisième mot (INF) est stocké dans le circuit (10) seulement si la transaction est refusée sans connexion avec ladite entité (23).

3. Procédé selon l'une quelconque des revendications 1 et 2, dans lequel au moins un troisième mot (INF), préalablement enregistré dans le circuit (10), est transmis à ladite entité (23) lors d'une validation de transaction par cette entité.

4. Procédé selon la revendication 3, dans lequel ledit troisième mot (INF) comporte un champ (56) indicateur de sa transmission à ladite entité (23).

5. Procédé selon l'une quelconque des revendications 1 à 4, dans lequel plusieurs troisièmes mots (INF) représentant chacun un refus, de préférence décidé sans connexion, sont stockés dans un fichier cyclique d'une mémoire non volatile (13) du circuit.

6. Procédé selon l'une quelconque des revendications 1 à 5, dans lequel ledit troisième mot (INF) comporte un champ (52) indicateur du rang de la transaction sans connexion depuis une transaction avec connexion à ladite entité (23).

7. Procédé selon l'une quelconque des revendications 1 à 6, dans lequel ledit premier mot (CVR/ADR) est contenu dans un élément de mémorisation non volatile du circuit (10).

8. Procédé selon l'une quelconque des revendications 1 à 7, dans lequel ledit premier mot (TVR) est contenu dans le terminal (20).

9. Procédé selon les revendications 6 et 7, dans lequel ledit troisième mot (INF) comporte au moins un champ (51) indicateur de la position d'un bit du premier mot (CVR/ADR) contenu dans le circuit (10) et au moins un champ (57) indicateur de la position d'un bit d'un autre premier mot (TVR) contenu dans le terminal (20).

10. Procédé selon l'une quelconque des revendications 1 à 9, appliqué à des transactions monétaires, dans lequel ledit troisième mot (INF) comporte un champ (54) indicateur de la position du bit de poids fort du montant de la transaction.

11. Procédé selon l'une quelconque des revendications 1 à 10, dans lequel ledit troisième mot (INF) comporte un champ (53) indicateur de la date de la transaction refusée.

12. Système de transaction impliquant au moins un circuit électronique (10), un terminal (20) et une entité (23) distincte du terminal et du circuit, comportant des moyens pour la mise en oeuvre du procédé selon l'une quelconque des revendications 1 à 11.

13. Circuit électronique (10) comportant des moyens pour la mise en oeuvre du procédé selon l'une quelconque des revendications 1 à 11.

14. Carte à puce (1) comportant au moins un circuit électronique (10) selon la revendication 13.
